**Europäisches Patentamt**

**European Patent Office**

**Office européen des brevets**

(19)

(11) Veröffentlichungsnummer: **0 280 037**
**B1**

# EUROPÄISCHE PATENTSCHRIFT

(12)

(45) Veröffentlichungstag der Patentschrift:
25.04.90

(51) Int. Cl.⁴: **B60R 13/04**

(21) Anmeldenummer: **88100865.0**

(22) Anmeldetag: **21.01.88**

(54) **Kraftfahrzeuglängskante.**

(30) Priorität: **26.02.87 DE 3706197**

(43) Veröffentlichungstag der Anmeldung:
**31.08.88 Patentblatt 88/35**

(45) Bekanntmachung des Hinweises auf die Patenterteilung:
**25.04.90 Patentblatt 90/17**

(84) Benannte Vertragsstaaten:
**AT BE CH DE ES FR GB GR IT LI LU NL SE**

(56) Entgegenhaltungen:
**DE-A- 3 150 027**
**DE-U- 8 201 296**
**DE-U- 8 205 958**
**FR-A- 1 337 870**
**GB-A- 2 112 699**

(73) Patentinhaber: **Continental AG, Königsworther
Platz 1 Postfach 1 69, D-3000 Hannover 1(DE)**

(72) Erfinder: **Fischer, Rolf, Marschnerstrasse 15,
D-3000 Hannover(DE)**
Erfinder: **Dietmar, Hermann, Dipl.-Ing., Kantstrasse 7,
D-3008 Garbsen 6(DE)**

# Beschreibung

Die Erfindung betrifft eine Kraftfahrzeuglängskante gemäß dem Oberbegriff des Patentanspruchs 1.

Derartige durch elastomere Profilleisten abgedeckte Kraftfahrzeuglängskanten sind z.B. aus den DE-A 3 003 216 und DE-A 3 150 027 sowie dem DE-U 6 808 025 bekannt, wobei insbesondere die seitliche Verbindung des Dachbleches mit den Seitenwandblechen von Kraftfahrzeugen in dieser Form ausgebildet ist und die an diesem Verbindungsbereich angeordnete Profilleiste dazu dient, scharfkantige Blechränder abzudecken, verbleibende Längsspalten auszufüllen bzw. zu überdecken und/oder eine Abdichtung - insbesondere gegenüber beweglichen Karosserieseitenteilen, wie Türen oder Fenstern - zu bewirken. Ferner kann an der Außenseite der Profilleiste eine Nut oder Lippe ein- bzw. angeformt sein, die eine Regenrinne bzw. Dichtung bildet.

Bisher wurden Kraftfahrzeuglängskanten dieser Art in aller Regel so gestaltet, daß ihr durch eine Profilleiste abzudeckender Bereich eine im gesamten Längsverlauf konstante Querschnittskontur aufwies mit der Folge, daß eine Profilleiste mit einer in Längsrichtung ebenfalls konstanten Querschnittskontur durchgängig paßgenau daran angebracht werden konnte. Offensichtlich bedeutete dies eine wesentliche Beschränkung und Beeinträchtigung der konstruktiven und ästhetischen Gestaltungsmöglichkeiten für die Kraftfahrzeugkarosserie; denn damit war der Konstrukteur und Designer häufig nicht frei, die die betreffende Kraftfahrzeuglängskante bildende Naht- bzw. Stoßstelle zweier Karosserieteile - insbesondere des Daches einerseits und eines oder mehrerer Seitenwandteile andererseits - so anzuordnen und auszubilden, daß eine optimale Festigkeit der Karosserie - insbesondere eine maximale Steifigkeit der Fahrgastzelle in den bei Unfällen kritischen Belastungsrichtungen - ebenso resultierte wie eine unter aerodynamischen sowie ästhetischen Gesichtspunkten optimierte Karosserieform.

Es stellte sich daher die Aufgabe, Kraftfahrzeuglängskanten der eingangs benannten Art so auszubilden, daß die beschriebenen Einschränkungen nicht mehr galten.

Diese Aufgabe wird erfindungsgemäß mit einer gattungsgemäßen Kraftfahrzeuglängskante gelöst, die die im kennzeichnenden Teil des Patentanspruchs 1 aufgeführten Merkmale aufweist. In den Unteransprüchen sind bevorzugte Ausführungsformen des Erfindungsgegenstandes angegeben.

Durch die erfindungsgemäße Kombination

- einer Kraftfahrzeuglängskante, deren mindestens einer Seitenbereich in Längsrichtung wechselnde Querschnitte aufweist,

- mit einer elastomeren Profilleiste, deren entsprechender Seitenbereich eine jeweils gegenläufig wechselnde Querschnittskontur besitzt, wird auf besonders einfache, technisch ebenso wie ästhetisch elegante Weise die Möglichkeit geschaffen, beispielsweise die Längsverbindung zwischen einem Kraftfahrzeugdach und den Karosserieseitenteilen im Bereich des oberen Randes der Fenster- und Türöffnungen anzuordnen, wo die Seitenteile nicht als durchgängig gleichmäßig gekrümmte Flächen verlaufen, sondern teils zurück- teils vorspringend geformt sind, um dabei nur den mittleren Querschnittsbereich sowohl der Kraftfahrzeuglängskante als auch der darauf befestigten Profilleiste geradlinig oder mit geringer Krümmung - insbesondere monoton gekrümmt - verlaufen zu lassen. Obwohl demnach der mittlere Querschnittsbereich sowohl der Kraftfahrzeuglängskante als auch der Profilleiste einen anderen Längsverlauf aufweist als mindestens einer der Seitenbereiche der Kraftfahrzeuglängskante und der Profilleiste, kann gemäß der vorliegenden Erfindung sichergestellt werden, daß die Profilleiste sich auch mit der Außenkante eben dieses Seitenbereiches durchgängig lückenlos an der Karosserie abstützt. Hierdurch wird erstens der betreffende Seitenbereich der Kraftfahrzeuglängskante schmutz- und wasserdicht überdeckt, und zweitens wird die Profilleiste gegen seitliches Kippen und Ausweichen stabilisiert, wobei sich besondere Maßnahmen, wie die Querversteifung der Profilleiste mittels darin eingebetteter Metallprofile, die zu diesem Zweck sonst üblich sind, in aller Regel erübrigen.

Vorzugsweise besteht die erfindungsgemäß verwendete Profilleiste aus einem durch Extrusion eines elastomeren Werkstoffes gebildeten Strang mit einem durch das Extrusionsmundstück vorgegebenen Querschnitt, von dem im Anschluß an die Extrusion durch einen in Längsrichtung kontinuierlich durchgeführten Schnitt mindestens an einer Seite unterschiedlich breite Queranteile weggeschnitten sind.

Zur Verbindung der erfindungsgemäßen Kraftfahrzeuglängskante und ihrer Profilleiste weist die Kraftfahrzeuglängskante vorzugsweise entlang ihrem Mittelbereich im wesentlichen äquidistant angeordnete Vorsprünge - insbesondere in der Form von T-Bolzen - auf, und in den Mittelbereich der Profilleiste ist eine durchlaufende Klemmleiste mit im wesentlichen c-förmigem Querschnitt fest eingebettet, die die besagten Vorsprünge formschlüssig umgreift.

Die Zeichnung verdeutlicht die vorliegende Erfindung anhand eines schematisch dargestellten Ausführungsbeispiels, und zwar zeigt

Fig. 1 eine an verschiedenen Stellen ihrer Längserstreckung quergeschnittene perspektivische Ansicht einer erfindungsgemäßen Kraftfahrzeuglängskante mit Profilleiste, und in

Fig. 2 sind in einer Querschnittsdarstellung einer erfindungsgemäßen Profilleiste unterschiedliche, vorzugsweise durch Beschneiden ihres einen Seitenbereichs erzeugte Querschnittskonturen wiedergegeben.

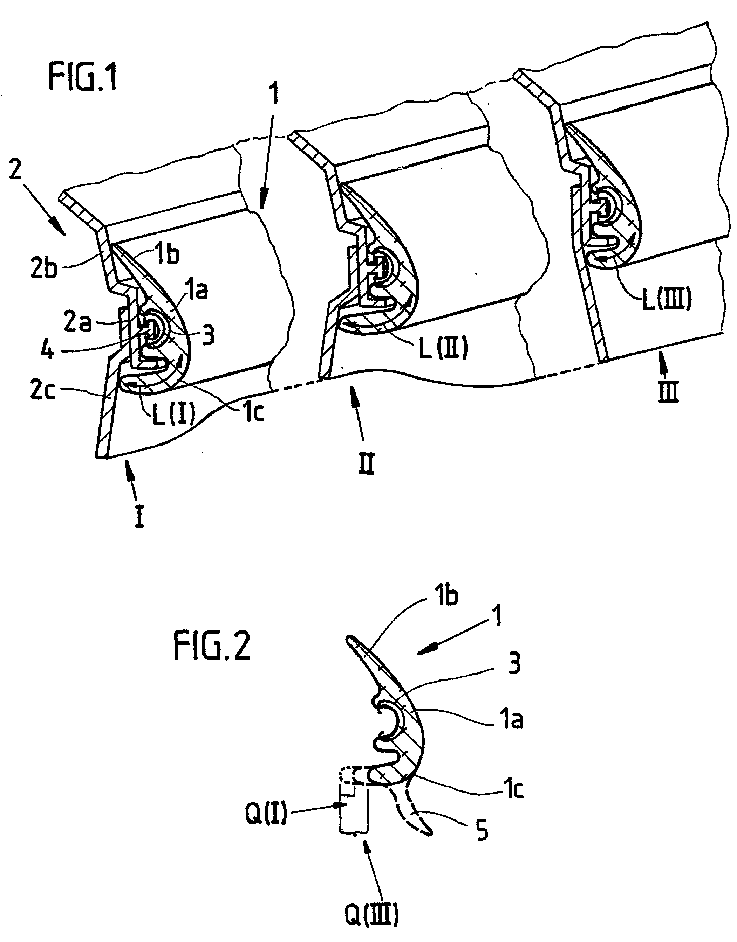

Die in Fig. 1 wiedergegebene erfindungsgemäße Kraftfahrzeuglängskante 2 stellt die Zusammensetzung zweier Karosserieblechteile dar, von denen das eine insbesondere das Dachblech und das andere ein mit diesem zusammengeschweißtes Seitenblech der Karosserie ist. Der Mittelbereich 2a der Kraftfahrzeuglängskante 2 verläuft in Längsrichtung etwa geradlinig oder mit geringer - insbesondere monotoner - Krümmung, so daß die Profilleiste 1 mit ihrem entsprechend verlaufenden Mittelteil 1a ohne Schwierigkeiten daran befestigt werden kann. Zur Befestigung dient vorzugsweise eine in die Profilleiste 1 eingebettete Klemmleiste 3 mit im wesentlichen c-förmigem Querschnitt, die mit entlang dem Mittelbereich 2a auf der Kraftfahrzeuglängskante aufrechtstehend fest angeordneten T-Bolzen 4 zusammenwirkt, indem sie deren Kopfteile oder daran befestigte konische Zwischenteile elastisch klemmend umfaßt.

Die oberen Seitenbereiche 1b und 2b zeigen in dem dargestellten Ausführungsbeispiel einen entsprechend gleichmäßigen Verlauf wie die Mittelbereiche 1a und 2a. Dagegen weist der untere Seitenbereich 2c der Kraftfahrzeuglängskante, der beispielsweise entlang der oberen Begrenzung der Seitenfenster und -türen verläuft, nach der vorliegenden Erfindung vor- und zurückspringende Abschnitte I, II und III auf, die erfindungsgemäß durch entsprechend kürzere bzw. längere·Bemessung der Quererstreckung L(I), L(II) und L(III) des Seitenbereichs 1c der Profilleiste 1 so ausgeglichen werden, daß die Seitenbereiche 1c und 2c in ihrer gesamten Längserstreckung kontinuierlich aneinander anliegen. Hierdurch wird nicht nur eine schmutz- und wasserdichte Abdeckung der Kraftfahrzeuglängskante geschaffen, sondern es wird auch vermieden, daß die Profilleiste durch seitlich auftretende Kräfte kippen kann. Dies ist insbesondere dann wichtig, wenn die Profilleiste - wie in Fig. 2 angedeutet - zusätzlich eine Dichtungslippe 5 oder dergl. trägt, die als Türdichtung dienen kann und die zur einwandfreien Erfüllung ihrer Funktion eine zusätzliche versteifende Metalleinlage in der Profilleiste erfordern würde, wenn die Profilleiste nicht durch die durchgängige Abstützung ihres Seitenbereichs 1c bereits eine ausreichende Stabilität besäße.

Die Profilleiste 1 ist erfindungsgemäß vorzugsweise als Abschnitt eines endlos extrudierten Stranges ausgebildet, der aus einem elastomeren Werkstoff besteht und von dessen Seitenbereich 1c durch einen kontinuierlich in Längsrichtung durchgeführten Schnitt, entsprechend der Längskontur des Seitenbereichs 2c der Kraftfahrzeuglängskante 2, unterschiedlich breite Queranteile Q(I), Q(II) - wie in Fig. 2 angedeutet - weggeschnitten sind.

## Patentansprüche

1. Kraftfahrzeuglängskante (2) mit einer sie zumindest teilweise abdeckenden, aus elastomerem Werkstoff bestehenden Profilleiste (1), die einen in Längsrichtung geradlinig oder mit geringer Krümmung - insbesondere monoton gekrümmt - durchlaufenden mittleren Querschnittsbereich (1a) sowie zwei beidseitig zu diesem angeordnete Seitenbereiche (1b, 1c) aufweist, wobei der Mittelbereich (1a) der Profilleiste (1) mit einem entsprechenden durchlaufenden Mittelbereich (2a) der Kraftfahrzeuglängskante (2) kraft- und/oder formschlüssig verbunden ist und mindestens einer der Seitenbereiche (1b, 1c) der Profilleiste (1) sich durchlaufend gegen den entsprechenden Seitenbereich (2b, 2c) der Kraftfahrzeuglängskante (2) abstützt, **dadurch gekennzeichnet,** daß mindestens ein Seitenbereich (2c) der Kraftfahrzeuglängskante (2) entlang seinem Längsverlauf in Richtung der Flächennormalen der Karosserieoberfläche zurück- bzw. vorspringende Abschnitte (I, II, III) aufweist und daß die Profilleiste (1) derart dem Längsverlauf der Kraftfahrzeuglängskante (2) angepaßt ist, daß ihr entsprechender Seitenbereich (1c) durch eine in den zurückspringenden Längsabschnitten der Kraftfahrzeuglängskante (2) entsprechend längere bzw. in den vorspringenden Längsabschnitten entsprechend kürzere Bemessung der Quererstreckung (L(I), L(II), L(III)) mit seinem freien Ende durchgängig an dem Seitenbereich (2c) der Kraftfahrzeuglängskante anliegt.

2. Kraftfahrzeuglängskante mit Profilleiste nach Anspruch 1, dadurch gekennzeichnet, daß die Profilleiste (1) ein von einem endlos extrudierten, aus einem elastomeren Werkstoff gebildeten Strang abgelängter Abschnitt ist, von dessen mindestens einem Seitenbereich (1b, 1c) durch einen in Längsrichtung kontinuierlich durchgeführten Schnitt unterschiedlich breite Queranteile (Q(I), Q(III)) weggeschnitten sind.

3. Kraftfahrzeuglängskante mit Profilleiste nach Anspruch 1 oder 2, dadurch gekennzeichnet, daß die Kraftfahrzeuglängskante (2) entlang ihrem Mittelbereich (2a) Vorsprünge (4) - insbesondere äquidistant angeordnete T-Bolzen - aufweist und daß die Profilleiste (1) eine mit ihrem Mittelbereich (1a) fest verbundene, in Längsrichtung durchlaufende Klemmleiste (3) mit im wesentlichen c-förmigem Querschnitt enthält, die die Vorsprünge (4) formschlüssig umgreift.

## Revendications

1. Arête longitudinale (2) de véhicule automobile, pourvue d'une baguette profilée (1) formée d'une matière élastomère et la recouvrant au moins partiellement, la baguette comportant une zone centrale de section droite (1a) pourvue d'une légère courbure - notamment une courbure monotone - ainsi que deux zones latérales (1b, 1c) disposées de chaque côté de la zone précitée, la zone centrale (1a) de la baguette profilée (1) étant reliée par complémentarité de forces et/ou de formes avec une zone centrale (2a) de profil correspondant de l'arête longitudinale de véhicule (2) et au moins une des zones latérales (1b, 1c) de la baguette profilée (1) s'appuyant de façon continue contre la zone latérale correspondante (2b, 2c) de l'arête longitudinale de véhicule (2), caractérisée en ce qu'au moins une zone latérale (2c) de l'arête longitudinale de véhicule (2) comporte, sur sa longueur, des parties en saillie et en retrait (I, II, III) dans la direction des normales à la surface de carrosserie et en ce que la baguette profilée (1) est adaptée au profil longitudinal de l'arête longitudinale de véhicule (2) de telle sorte que la zone latérale correspondante (1c) s'applique de façon continue par son extrémité libre contre la zone latérale (2c) de l'arête longitudinale de véhicule en donnant à sa dimension transversale (L(I), L(II), L(III)) un dimensionnement respectivement allongé en correspondance aux parties longitudinales en retrait de l'arête longitudinale de véhicule (2) ou bien raccourci en correspondance aux parties longitudinales en saillie de ladite arête.

2. Arête longitudinale de véhicule automobile avec baguette profilée selon la revendication 1, caractérisée en ce que la baguette profilée (1) est un tronçon, découpé à longueur, d'une barre extrudée sans fin à partir d'un matériau élastomère et dans au moins une zone latérale (1b, 1c) duquel sont enlevées par découpage, à l'aide d'une coupe effectuée de façon continue dans la direction longitudinale, des parties transversales de largeurs différentes (Q(I), Q(III)).

3. Arête longitudinale de véhicule avec baguette profilée selon une des revendications 1 ou 2, caractérisée en ce que l'arête longitudinale de véhicule (2) comporte, le long de sa zone centrale (2a), des saillies (4) – notamment des protubérances en forme de T disposées de façon équidistante – et en ce que la baguette profilée (1) est pourvue d'une moulure de blocage (3), ayant une section droite sensiblement en forme de c, reliée solidement à la zone centrale (1a) de la baguette en s'étendant de façon continue dans sa direction longitudinale et qui s'accroche par complémentarité de formes sur les saillies (4).

**Claims**

1. Longitudinal vehicle edging (2), having a profile strip (1), which covers the edging at least partially and is formed from an elastomeric material, the profile strip having a central cross-sectional area (1a), which extends longitudinally therethrough in a straight line or with a slight curve – more especially in a monotonically curved manner – and two lateral areas (1b, 1c) which are disposed on each side of the cross-sectional area, the central area (1a) of the profile strip (1) being connected, in a force- and/or form-fitting manner, to a corresponding central region (2a) of the longitudinal vehicle edging (2), which extends therethrough, and at least one of the lateral areas (1b, 1c) of the profile strip (1) is continuously supported against the corresponding lateral area (2b, 2c) of the longitudinal vehicle edging (2), characterised in that at least one lateral area (2c) of the longitudinal vehicle edging (2) has sections (I, II, III), which curve rearwardly or forwardly, respectively, along its longitudinal configuration in the direction of the normal line of the plane surface of the vehicle body, and in that the profile strip (1) is so adapted to the longitudinal configuration of the longitudinal vehicle edging (2) that its corresponding lateral area (1c) abuts continuously, with its free end, against the lateral area (2c) of the longitudinal vehicle edging as a result of a dimension for the transverse extension (L(I), L(II), L(III)), which is accordingly longer in the rearwardly curved longitudinal sections of the longitudinal vehicle edging (2), or respectively is accordingly shorter in the forwardly curved longitudinal sections.

2. Longitudinal vehicle edging having a profile strip in accordance with claim 1, characterised in that the profile strip (1) is a section, which has been cut to length from an endlessly extruded body formed from an elastomeric material, transverse portions (Q(I), Q(III)) of different widths being cut away from at least one lateral area (1b, 1c) of said section by means of a cut which is effected longitudinally therethrough.

3. Longitudinal vehicle edging having a profile strip according to claim 1 or 2, characterised in that the longitudinal vehicle edging (2) has projection members (4) along its central area (2a) – more especially T-shaped bolts which are disposed in an equidistant manner from one another – and in that the profile strip (1) includes a clamping strip (3), which is securely connected to its central area (1a) and extends longitudinally therethrough, the clamping strip having a substantially C-shaped cross-section and engaging around the projection members (4) in a form-fitting manner.

## FIG.1

## FIG.2